(19) Europäisches Patentamt European Patent Office Office européen des brevets

(11) **EP 3 204 270 B1**

(12) **FASCICULE DE BREVET EUROPEEN**

(45) Date de publication et mention de la délivrance du brevet:
**19.08.2020 Bulletin 2020/34**

(21) Numéro de dépôt: **15788112.9**

(22) Date de dépôt: **29.09.2015**

(51) Int Cl.:
**B60T 8/1755** *(2006.01)* **B60T 8/1764** *(2006.01)*

(86) Numéro de dépôt international:
**PCT/FR2015/052603**

(87) Numéro de publication internationale:
**WO 2016/055716 (14.04.2016 Gazette 2016/15)**

(54) **PROCEDE DE CONTROLE DU TIRAGE LATERAL D'UN VEHICULE AUTOMOBILE LORS DU FREINAGE**

VERFAHREN ZUR STEUERUNG DER SEITLICHEN ZIEHENS EINES KRAFTFAHRZEUGS WÄHREND DER BREMSUNG

METHOD FOR CONTROLLING THE LATERAL PULLING OF A MOTOR VEHICLE DURING BRAKING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2014 FR 1459694**

(43) Date de publication de la demande:
**16.08.2017 Bulletin 2017/33**

(73) Titulaire: **Renault S.A.S.**
**92100 Boulogne-Billancourt (FR)**

(72) Inventeur: **MARTINEZ, Didier**
**F-27920 Saint-etienne-sous-Bailleul (FR)**

(56) Documents cités:
**JP-A- H0 853 060     JP-A- H06 144 188**
**US-A- 5 407 259     US-A- 5 407 259**
**US-B1- 8 831 853     US-B1- 8 831 853**

**Description**

L'invention concerne un procédé de contrôle du tirage latéral d'un véhicule automobile en mouvement, lors du freinage du véhicule automobile.

Lorsqu'un conducteur d'un véhicule automobile génère une consigne de freinage, on applique sur chaque roue du véhicule un effort de trainée, par l'intermédiaire d'un frein.

Il est relativement important que les moments produits par les efforts de trainée se compensent pour chaque train de roues du véhicule automobile, afin que le freinage soit rectiligne.

Cependant, il est fréquent que pour un train de roues donné, les efforts de trainée appliqués sur chaque roue présentent une certaine dissymétrie. Une telle dissymétrie crée une différence dans les moments produits par chaque roue du train de roues sur le véhicule automobile, ce qui peut conduire à un effet de tirage latéral, autrement dit une accélération latérale menant à une prise de lacet du véhicule automobile.

Les petits véhicules automobiles, en particulier ceux à faible empattement du châssis sont particulièrement exposés aux prises de lacets lors du freinage.

Il est donc relativement important de contrôler le tirage lors du freinage d'un train de roues d'un véhicule automobile.

Il est par exemple connu de mesurer, par des capteurs d'état du véhicule automobile, la prise de lacet du véhicule automobile et de contrer cette prise de lacet en agissant sur les efforts de trainées de chaque roue du véhicule automobile.

Le brevet délivré aux Etats Unis US 5 407 259 divulgue un procédé et un dispositif de réduction du lacet d'un véhicule sur la base des différences d'accélération des roues droites et gauches du véhicule et de l'utilisation de la commande de freinage. Le dispositif de réduction du moment de lacet comprend des capteurs de vitesse de roue pour détecter les vitesses des roues droites et gauches, un dispositif de calcul de l'accélération pour calculer les accélérations des roues droites et gauches sur la base de la vitesse des roues droites et gauches, un dispositif de soustraction pour soustraire la différence d'accélération entre les roues droites et gauches, un dispositif de contrôle du freinage pour contrôler la force de freinage sur la base de la différence des accélérations, et un dispositif de modulation de la pression de freinage pour moduler la pression de freinage qui est fournie à chaque roue. La correction appliquée dépend de deux paramètres de temps T1 et T2 qui sont caculés sur la base de la différence d'accélération entre les roues droite et gauche. En fonction d'un compteur alternativement pair et impair, l'algorithme itératif réduit ou maintient la pression. Si le compteur P1 est impair, l'unité de traitement 50 réduit la pression de freinage de celle des roues avant ayant un coefficient de frottement plus élevé pendant la période de temps qui est déterminée par le temps T1. Si le compteur P1 est pair, l'unité de microprocesseur 50 maintient la pression de freinage de l'une des roues avant ayant un coefficient de frottement plus élevé pendant la période de temps qui est déterminée par le temps T2. Après cela, l'unité de microprocesseur 50 retourne au sous-programme de contrôle de la pression de freinage.

Cependant, une telle solution est relativement lente, et la correction peut être remarquée par le conducteur du véhicule, ce qui produit généralement un effet gênant pour le pilotage, par exemple une sensation de perte de contrôle.

Aussi il existe un besoin pour un procédé de contrôle du tirage latéral au freinage plus rapide.

A cet effet, l'objet de l'invention concerne un procédé de contrôle du tirage latéral d'un véhicule automobile (1) en mouvement, lors du freinage dudit véhicule automobile (1), ledit véhicule automobile (1) comprenant au moins un train de roues (4) ; ledit train de roues (4) comprenant une roue gauche (2) et une roue droite (3) ; chaque roue (2,3) dudit train de roues (4) définissant une vitesse angulaire (v2, v3) et une accélération angulaire (a2, a3); chaque roue (2,3) dudit train de roues (4) coopérant avec un moyen de freinage (6), de telle sorte que ledit moyen de freinage (6) applique un effort de trainée sur la roue (2,3) associée de manière à réduire la vitesse angulaire (v2, v3) de ladite roue associée (2,3) ; comprenant les étapes suivantes :a) calculer une valeur représentative de l'écart entre les accélérations angulaires des roues gauche (2) et droite (3) du train de roues (4) ;b) calculer une valeur de correction (y) en fonction d'au moins ladite valeur représentative de l'écart entre les accélérations angulaires (a2, a3) des roues gauche (2) et droite (3) du train de roues (4) ;c) pour chaque roue (2,3) du train de roues (4), commander le moyen de freinage (6) associé de manière à modifier l'effort de trainée appliqué par le moyen de freinage (6) associé, en fonction de la valeur de correction (y) calculée à l'étape b), de telle sorte que l'effort de trainée appliqué sur une première roue (2,3), choisie entre la roue gauche (2) et la roue droite (3) du train de roues (4), est augmenté et que l'effort de trainée appliqué sur une deuxième roue (2,3), différente de la première roue (2,3), est diminué, afin de réduire ladite valeur représentative de l'écart entre les accélérations angulaires (a2,a3) des roues gauche (2) et droite (3) dudit train de roues (4) ; la valeur de correction (y) étant proportionnelle (G) à la valeur représentative de l'écart entre les accélérations angulaires (a2, a3) des roues gauche (2) et droite (3) du train de roues (4).

Ainsi on peut obtenir un procédé de contrôle relativement rapide, permettant de corriger le tirage latéral du véhicule avant que le conducteur ne s'en aperçoive.

En particulier, la valeur de correction peut être l'écart estimé entre les décélérations angulaires des roues amplifié d'un gain de correction.

Avantageusement et de manière non limitative, les étapes a) à c) peuvent être répétées jusqu'à ce que la valeur représentative de l'écart entre les accélérations angulaires des roues gauche et droite du train de roues, calculée au cours de l'étape a), soit nulle. La valeur représentative de l'écart entre les accélérations angulaires peut aussi être relativement proche de zéro.

La correction étant active de manière continue depuis l'amorce de freinage, la valeur représentative de l'écart tendra naturellement vers une valeur nulle.

En particulier, la valeur représentative de l'écart est directement liée à la sensibilité du système de correction, soit côté actionneur soit côté capteur.

De cette manière, la valeur représentative de l'écart entre les accélérations angulaires peut rapidement converger vers une valeur proche de zéro, et le tirage latéral peut ainsi être corrigé de manière relativement efficace.

Avantageusement et de manière non limitative, au cours de l'étape a) :

-   pour chaque roue gauche et droite du train de roues, on peut recevoir une valeur d'accélération angulaire de la roue, par exemple par un capteur d'accélération angulaire de la roue, par un filtre passe-haut ou un filtre dérivateur appliqué sur la vitesse angulaire de la roue, ou par tout autre moyen d'évaluation de l'accélération angulaire ;
-   on peut calculer la différence entre les valeurs d'accélération angulaire calculées de la roue gauche et de la roue droite.

Ainsi on peut obtenir de manière relativement rapide l'écart entre les accélérations angulaires des roues gauche et droite du train de roues.

Selon un mode de réalisation préféré, et de manière non limitative, au cours de l'étape a) :

-   pour chaque roue gauche et droite du train de roues, on peut recevoir une valeur de vitesse angulaire de la roue, par exemple par l'intermédiaire d'un capteur de vitesse angulaire associé à la roue;
-   on peut calculer une valeur de différence entre les valeurs de vitesse angulaire reçues ;
-   on peut estimer une valeur de dérivée de la différence entre les valeurs de vitesse angulaire, par un filtre passe-haut, un filtre dérivateur ou tout autre moyen de calcul de dérivée, ladite valeur de dérivée correspondant à la valeur représentative de l'écart entre les accélérations angulaires des roues gauche et droite du train de roues.

La valeur de correction peut donc être obtenue par la multiplication d'un gain, par exemple constant, par exemple comprenant au moins la valeur ½, avec la valeur de l'écart entre les accélérations angulaires des roues gauche et droite du train de roues

Avantageusement et de manière non limitative, le procédé de contrôle peut être appliqué à un train de roues avant d'un véhicule automobile. Ainsi le freinage corrigé peut être relativement fiable.

L'invention se rapporte aussi à un dispositif de contrôle (8) du tirage latéral d'un véhicule automobile (1) en mouvement, lors du freinage dudit véhicule automobile (1),ledit véhicule automobile (1) comprenant au moins un train de roues (4) ; ledit train de roues (4) comprenant une roue gauche (2) et une roue droite (3) ; chaque roue (2,3) dudit train de roues (4) définissant une vitesse angulaire (v2,v3) et une accélération angulaire (a2,a3); chaque roue (2,3) dudit train de roues (4) coopérant avec un moyen de freinage (6), de telle sorte que ledit moyen de freinage (6) applique un effort de trainée sur la roue (2,3) associée de manière à réduire la vitesse angulaire (v2,v3) de ladite roue (2,3) associée ; comprenant :

-   des moyens de calcul (12) aptes à calculer une valeur représentative de l'écart entre les accélérations angulaires (a2, a3) des roues gauche (2) et droite (3) du train de roues (4) ; les moyens de calcul (12) étant en outre aptes à calculer une valeur de correction (y) en fonction d'au moins ladite valeur représentative de l'écart entre les accélérations angulaires (a2, a3) des roues gauche (2) et droite (3) du train de roues (4) ;

-   des moyens de commande (14) pour commander, pour chaque roue (2,3) du train de roues (4), le moyen de freinage (6) associé de manière à modifier l'effort de trainée appliqué par ledit moyen de freinage (6) associé, en fonction de la valeur de correction (y) calculée par les moyens de calcul (12), de telle sorte que l'effort de trainée appliqué sur une première roue (2,3), choisie entre la roue gauche (2) et la roue droite (3) du train de roues (4), est augmenté et que l'effort de trainée appliqué sur une deuxième roue (2,3), différente de la première roue (2,3), est diminué, afin de réduire ladite valeur représentative de l'écart entre les accélérations angulaires (a2,a3) des roues gauche (2) et droite (3) dudit train de roues (4) ; la valeur de correction (y) étant proportionnelle (G) à la valeur représentative de l'écart entre les accélérations angulaires (a2, a3) des roues gauche (2) et droite (3) du train de roues (4).

L'invention concerne en outre un véhicule automobile comprenant un dispositif de contrôle tel que décrit précédemment.

L'invention est maintenant décrite en référence aux dessins annexés, non limitatifs, dans lesquels :

-   la figure 1 est un vue schématique d'un véhicule automobile selon un mode de réalisation de l'invention ;
-   la figure 2 est un schéma synoptique du déroulement du procédé de contrôle selon un premier mode de réalisation de l'invention ;
-   la figure 3 est un schéma synoptique du déroulement du procédé de contrôle selon un deuxième mode de réalisation de l'invention.

Dans la présente description, les termes avant, arrière, supérieur, inférieur, font référence aux directions avant et arrière du véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

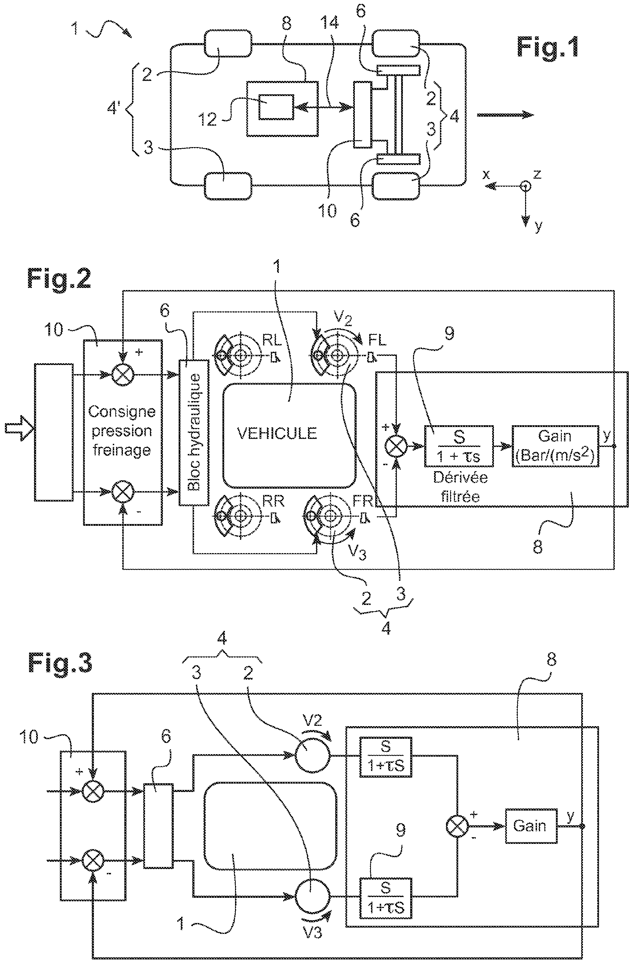

En référence à la figure 1, un véhicule automobile 1 comprend un train de roues avant 4 et un train de roues arrière 4'. Chaque train de roues 4,4' comprend une roue gauche 2 et une roue droite 3.

Chaque roue 2,3 du véhicule automobile coopère avec un moyen de freinage 6, ici un disque de frein à commande hydraulique 6.

Lorsque le véhicule est en mouvement, chaque roue 2,3 définit une vitesse angulaire v2, v3 et une accélération angulaire a2, a3.

En référence à la figure 2, pour freiner, un conducteur actionne la pédale de frein du véhicule automobile, non représentée. Une consigne de freinage est alors transmise à un dispositif de commande de freinage 10.

Le dispositif de commande de freinage 10 calcule alors, pour chaque roue 2,3, une valeur d'effort de trainée, exprimée ici en Nm, à appliquer.

Cette valeur d'effort de trainée calculée est ensuite envoyée aux moyens de freinage 6 de chaque roue 2,3, qui appliquent alors l'effort de trainée correspondant sur la roue 2,3 associée.

Un dispositif de contrôle du tirage latéral 8 du véhicule automobile 1 reçoit alors une valeur de vitesse angulaire v2, v3 de chaque roue 2,3 du train avant 4.

Dans la présente description, le procédé de commande du contrôle au tirage mis en œuvre par le dispositif de contrôle du tirage latéral 8, n'est appliqué que pour le train de roues avant 4. En effet, lors du freinage d'un véhicule automobile 1, environ 80% du freinage repose sur le train de roues avant 4. Cependant le procédé peut s'appliquer aussi bien au train de roues arrière 4', et peut être mis en œuvre pour les deux trains de roues 4, 4' simultanément.

Le dispositif de contrôle du tirage latéral 8 comprend des moyens de calcul 12, ici un microprocesseur 12, qui reçoit les valeurs de vitesse angulaire v2, v3, par exemple en rad/s ou en degrés/s, respectivement des roues gauche 2 et droite 3 du train avant 4.

En référence à la figure 2, les moyens de calcul 12 calculent alors une valeur de différence ε entre les valeurs de vitesse angulaire reçues v2 et v3. On peut obtenir cette valeur de différence ε en mettant en œuvre cette équation :

$$\varepsilon = v2 - v3$$

Il est évident pour l'homme du métier qu'on peut aisément faire correspondre un écart de vitesse angulaire avec une approximation d'un écart en vitesse longitudinale, en corrigeant cette valeur d'écart par des paramètres des roues 2,3, par exemple en fonction de la valeur du rayon des roues 2,3, de telle sorte qu'on peut considérer ε homogène avec une grandeur exprimée en m/s, moyennant un gain de conversion.

Les moyens de calcul 12 estiment ensuite une valeur de dérivée de la valeur de différence ε.

Cette valeur de dérivée dε/dt, peut être obtenue par l'application d'un filtre passe-haut 9.

Autrement dit, pour estimer la valeur de dérivée de la valeur de différence ε, on applique, en passant dans le domaine fréquentiel, le filtre passe-haut 9 suivant :

$$s/(1 + \tau s)$$

Dans lequel :

- τ est constante de temps du circuit ;
- s est la variable de Laplace.

La fréquence de coupure du filtre de passe-haut (1/τ) sera ajustée de manière à ce que la dérivée filtrée soit dans un domaine de fréquences compatible avec la bande passante recherchée pour l'efficacité de la correction, ce qui est une chose bien connue de l'homme du métier.

La détermination de l'action dérivée est faite de 0 à la valeur médiane de la fréquence de coupure.

Dans le cas d'un système de freinage, la bande passante de ce dernier est de l'ordre 10 Hz. La fréquence de coupure du filtre passe-haut est de l'ordre de 20 Hz ou plus.

Plus généralement, la mise en œuvre d'un tel filtre passe-haut 9, ou filtre dérivateur 9, est une chose bien connue de l'homme du métier.

Les moyens de calcul 12 obtiennent alors, en résultat une valeur dérivée de la valeur de différence ε. Cette valeur dérivée correspond à la valeur représentative de l'écart entre les accélérations angulaires des roues droites et gauche du train de roues.

Dans un mode de réalisation alternatif, en référence à la figure 3, les moyens de calcul 12 peuvent recevoir les valeurs de vitesse angulaire v2, v3 des roues 2,3 du train avant, puis estimer, pour chaque roue 2,3 du train de roues 4, les valeurs dérivées des valeurs de vitesse angulaire v2, v3 de manière à obtenir pour chaque roue l'accélération angulaire a2, a3 de chaque roue 2,3.

Les valeurs dérivées peuvent aussi être obtenues par l'application d'un filtre passe-haut 9 pour chaque valeur de vitesse angulaire v2, v3 de chaque roue 2,3, tel que décrit précédemment.

Les valeurs dérivées peuvent aussi être directement envoyées par un capteur d'accélération angulaire installé sur chaque roue 2,3 du train avant.

Ensuite, les moyens de calcul 12 calculent la différence a2-a3 entre les valeurs d'accélération angulaire des roues 2,3 du train avant 4. Cette différence correspond à la valeur représentative de l'écart entre les accélérations angulaires des roues gauche 2 et droite 3 du train de roues 4.

En référence aux figures 1, 2 et 3, les moyens de calcul 12 du dispositif de contrôle du tirage latéral 8, calculent une valeur de correction y. La valeur de correction y est obtenue pour chaque roue 2, 3 par la multiplication de la valeur représentative de l'écart entre les accélérations angulaires des roues gauche 2 et droite 3 du train de roues 4 avec une valeur de gain G. la valeur de correction y étant considérée comme homogène avec une grandeur exprimée en bar/(m/s$^2$)

En première approximation la valeur de gain G est égale à ½. Mais elle doit aussi tenir compte de paramètres d'asservissement biens connus de l'homme du métier.

La valeur de correction y est ensuite transmise par des moyens de commande 14, ici un bus de communication 14, au dispositif de commande de freinage 10 afin de commander l'application de la valeur de correction y aux moyens de freinage 6 de chaque roue 2,3 du train de roues avant 4.

La valeur de correction y est alors envoyée en positif +y au dispositif de commande de freinage 10 pour la roue gauche 2, et en négatif -y, pour la roue droite 3. Cette valeur de correction +y, -y s'ajoute aux efforts de trainée à appliquer à chaque roue 2,3, afin de corriger la différence d'accélération angulaire entre les roues gauche 2 et droite 3 du train de roues avant 4.

La valeur de correction y peut aussi, selon un alternative, n'être envoyée qu'une fois au dispositif de commande de freinage, qui procédera lui-même à l'ajout en positif de la valeur de correction +y à l'effort de trainée à appliquer à la roue gauche 2, et en négatif -y à l'effort de trainée à appliquer à la roue droite 3.

On procède au calcul d'une valeur de correction tant que le conducteur applique une consigne de freinage, et tant que la valeur représentative de l'écart entre les accélérations angulaires des roues gauche 2 et droite 3 du train de roues 4 est non nulle.

Autrement dit, le procédé décrit est répété par le dispositif de contrôle du tirage latéral (8) tant que la différence d'accélération angulaire entre les roues gauche 2 et droite 3 du train de roues avant 4 est non nulle ou non négligeable. On pourra par exemple définir un seuil d'arrêt du procédé de contrôle du tirage latéral, par exemple sensiblement proche de zéro, par exemple inférieur à 2% de la valeur de la moyenne des efforts de trainée appliqués aux roues 2,3 du train de roues avant 4.

## Revendications

1. Procédé de contrôle du tirage latéral d'un véhicule automobile (1) en mouvement, lors du freinage dudit véhicule automobile (1), ledit véhicule automobile (1) comprenant au moins un train de roues (4) ; ledit train de roues (4) comprenant une roue gauche (2) et une roue droite (3) ; chaque roue (2,3) dudit train de roues (4) définissant une vitesse angulaire (v2, v3) et une accélération angulaire (a2, a3);
chaque roue (2,3) dudit train de roues (4) coopérant avec un moyen de freinage (6), de telle sorte que ledit moyen de freinage (6) applique un effort de trainée sur la roue (2,3) associée de manière à réduire la vitesse angulaire (v2, v3) de ladite roue associée (2,3) ;
comprenant les étapes suivantes :

   a) calculer une valeur représentative de l'écart entre les accélérations angulaires des roues gauche (2) et droite (3) du train de roues (4) ;
   b) calculer une valeur de correction (y) en fonction d'au moins ladite valeur représentative de l'écart entre les accélérations angulaires (a2, a3) des roues gauche (2) et droite (3) du train de roues (4) ;
   c) pour chaque roue (2,3) du train de roues (4), commander le moyen de freinage (6) associé de manière à modifier l'effort de trainée appliqué par le moyen de freinage (6) associé, en fonction de la valeur de correction (y) calculée à l'étape b), de telle sorte que l'effort de trainée appliqué sur une première roue (2,3), choisie entre la roue gauche (2) et la roue droite (3) du train de roues (4), est augmenté et que l'effort de trainée appliqué sur une deuxième roue (2,3), différente de la première roue (2,3), est diminué, afin de réduire ladite valeur représentative de l'écart entre les accélérations angulaires (a2,a3) des roues gauche (2) et droite (3) dudit train de roues (4) ;

   la valeur de correction (y) étant proportionnelle (G) à la valeur représentative de l'écart entre les accélérations angulaires (a2, a3) des roues gauche (2) et droite (3) du train de roues (4).

2. Procédé de contrôle selon la revendication 1, **caractérisé en ce que** les étapes a) à c) sont répétées jusqu'à ce que la valeur représentative de l'écart entre les accélérations angulaires (a2,a3) des roues gauche (2) et droite (3) du train de roues (4), calculée au cours de l'étape a), soit nulle.

3. Procédé de contrôle, selon l'une quelconque des revendications 1 ou 2, **caractérisé en ce qu'**au cours de l'étape a) :

- pour chaque roue gauche (2) et droite (3) du train de roues (4), on reçoit une valeur d'accélération angulaire (a2, a3) de ladite roue (2,3) ;
- on calcule la différence entre les valeurs d'accélération angulaire (a2,a3) calculées de la roue gauche (2) et de la roue droite (3).

4. Procédé de contrôle, selon l'une quelconque des revendications 1 ou 2, **caractérisé en ce qu'**au cours de l'étape a) :

   - pour chaque roue gauche (2) et droite (3) du train de roues (4), on reçoit une valeur de vitesse angulaire (v2,v3) de ladite roue (2,3) ;
   - on calcule une valeur de différence ($\varepsilon$) entre les valeurs de vitesse angulaire (v2, v3) reçues ;
   - on estime une valeur de dérivée de la différence entre les valeurs de vitesse angulaire (v2,v3), ladite valeur de dérivée correspondant à la valeur représentative de l'écart entre les accélérations angulaires (a2,a3) des roues gauche (2) et droite (3) du train de roues (4).

5. Procédé de contrôle, selon l'une quelconque des revendications 1 à 4, **caractérisé en ce qu'**il est appliqué à un train de roues avant (4) d'un véhicule automobile (1).

6. Dispositif de contrôle (8) du tirage latéral d'un véhicule automobile (1) en mouvement, lors du freinage dudit véhicule automobile (1),
   ledit véhicule automobile (1) comprenant au moins un train de roues (4) ; ledit train de roues (4) comprenant une roue gauche (2) et une roue droite (3) ;
   chaque roue (2,3) dudit train de roues (4) définissant une vitesse angulaire (v2,v3) et une accélération angulaire (a2,a3);
   chaque roue (2,3) dudit train de roues (4) coopérant avec un moyen de freinage (6), de telle sorte que ledit moyen de freinage (6) applique un effort de trainée sur la roue (2,3) associée de manière à réduire la vitesse angulaire (v2,v3) de ladite roue (2,3) associée ;
   **caractérisé en ce qu'**il comprend :

   - des moyens de calcul (12) aptes à calculer une valeur représentative de l'écart entre les accélérations angulaires (a2,a3) des roues gauche (2) et droite (3) du train de roues (4) ; les moyens de calcul (12) étant en outre aptes à calculer une valeur de correction (y) en fonction d'au moins ladite valeur représentative de l'écart entre les accélérations angulaires (a2,a3) des roues gauche (2) et droite (3) du train de roues (4) ;
   - des moyens de commande (14) pour commander, pour chaque roue (2,3) du train de roues (4), le moyen de freinage (6) associé de manière à modifier l'effort de trainée appliqué par ledit moyen de freinage (6) associé, en fonction de la valeur de correction (y) calculée par les moyens de calcul (12), de telle sorte que l'effort de trainée appliqué sur une première roue (2,3), choisie entre la roue gauche (2) et la roue droite (3) du train de roues (4), est augmenté et que l'effort de trainée appliqué sur une deuxième roue (2,3), différente de la première roue (2,3), est diminué, afin de réduire ladite valeur représentative de l'écart entre les accélérations angulaires (a2,a3) des roues gauche (2) et droite (3) dudit train de roues (4) ;

la valeur de correction (y) étant proportionnelle (G) à la valeur représentative de l'écart entre les accélérations angulaires (a2, a3) des roues gauche (2) et droite (3) du train de roues (4).

7. Véhicule automobile (1) comprenant un dispositif de contrôle (8) selon la revendication 6.

**Patentansprüche**

1. Verfahren zum Steuern des seitlichen Zugs eines in Bewegung befindlichen Kraftfahrzeugs (1) beim Bremsen des Kraftfahrzeugs (1), wobei das Kraftfahrzeug (1) zumindest einen Radsatz (4) umfasst; wobei der Radsatz (4) ein linkes Rad (2) und ein rechtes Rad (3) umfasst; wobei jedes Rad (2, 3) des Radsatzes (4) eine Winkelgeschwindigkeit (v2, v3) und eine Winkelbeschleunigung (a2, a3) definiert; wobei jedes Rad (2, 3) des Radsatzes (4) mit einem Bremsmittel (6) zusammenwirkt, sodass das Bremsmittel (6) eine Schleppkraft auf das zugeordnete Rad (2, 3) ausübt, um die Winkelgeschwindigkeit (v2, v3) des zugeordneten Rades (2, 3) zu verringern; umfasst die folgenden Schritte:

   a) Berechnen eines Wertes, der für die Differenz zwischen den Winkelbeschleunigungen des linken Rades (2) und des rechten Rades (3) des Radsatzes (4) repräsentativ ist;
   b) Berechnen eines Korrekturwertes (y) in Abhängigkeit zumindest von dem für die Differenz zwischen den Winkelbeschleunigungen (a2, a3) des linken Rades (2) und des rechten Rades (3) des Radsatzes (4) repräsentativen Wert;
   c) für jedes Rad (2, 3) des Radsatzes (4), Steuern des zugeordneten Bremsmittels (6), um die von dem zugeordneten Bremsmittel (6) ausgeübte Schleppkraft in Abhängigkeit von dem in Schritt b) berechneten Korrekturwert (y) zu ändern, sodass die auf ein erstes Rad (2, 3), das zwischen dem linken Rad (2) und dem rechten Rad (3) des Radsatzes (4) ausgewählt ist, ausgeübte Schleppkraft erhöht wird und die auf ein zweites Rad (2, 3), das sich vom ersten Rad (2, 3) unterscheidet, ausgeübte Schleppkraft verringert wird, um den für die Differenz zwischen den Winkelbeschleunigungen (a2, a3) des linken Rades (2) und des rechten Rades (3) des Radsatzes (4) repräsentativen Wert zu verringern;

wobei der Korrekturwert (y) proportional (G) zu dem für die Differenz zwischen den Winkelbeschleunigungen (a2, a3) des linken Rades (2) und des rechten Rades (3) des Radsatzes (4) repräsentativen Wert ist.

2. Steuerungsverfahren nach Anspruch 1, **dadurch gekennzeichnet, dass** die Schritte a) bis c) wiederholt werden, bis der für die Differenz zwischen den Winkelbeschleunigungen (a2, a3) des linken Rades (2) und des rechten Rades (3) des Radsatzes (4) repräsentative Wert, der im Schritt a) berechnet wurde, Null ist.

3. Steuerungsverfahren nach einem der Ansprüche 1 oder 2, **dadurch gekennzeichnet, dass** in Schritt a):

   - für jedes linke Rad (2) und rechte Rad (3) des Radsatzes (4) ein Winkelbeschleunigungswert (a2, a3) des Rades (2, 3) erhalten wird;
   - die Differenz zwischen den berechneten Winkelbeschleunigungswerten (a2, a3) des linken Rades (2) und des rechten Rades (3) berechnet wird.

4. Steuerungsverfahren nach einem der Ansprüche 1 oder 2, **dadurch gekennzeichnet, dass** in Schritt a):

   - für jedes linke Rad (2) und rechte Rad (3) des Radsatzes (4) ein Winkelgeschwindigkeitswert (v2, v3) des Rades (2, 3) erhalten wird;
   - ein Differenzwert ($\varepsilon$) zwischen den erhaltenen Winkelgeschwindigkeitswerten (v2, v3) berechnet wird;
   - ein Ableitungswert der Differenz zwischen den Winkelgeschwindigkeitswerten (v2, v3) geschätzt wird, wobei der Ableitungswert dem für die Differenz zwischen den Winkelbeschleunigungen (a2, a3) des linken Rades (2) und des rechten Rades (3) des Radsatzes (4) repräsentativen Wert entspricht.

5. Steuerungsverfahren nach einem der Ansprüche 1 bis 4, **dadurch gekennzeichnet, dass** es auf einen vorderen Radsatz (4) eines Kraftfahrzeugs (1) angewandt wird.

6. Vorrichtung zum Steuern (8) des seitlichen Zugs eines in Bewegung befindlichen Kraftfahrzeugs (1) beim Bremsen des Kraftfahrzeugs (1),
wobei das Kraftfahrzeug (1) zumindest einen Radsatz (4) umfasst; wobei der Radsatz (4) ein linkes Rad (2) und ein rechtes Rad (3) umfasst; wobei jedes Rad (2, 3) des Radsatzes (4) eine Winkelgeschwindigkeit (v2, v3) und eine Winkelbeschleunigung (a2, a3) definiert;
wobei jedes Rad (2, 3) des Radsatzes (4) mit einem Bremsmittel (6) zusammenwirkt, sodass das Bremsmittel (6) eine Schleppkraft auf das zugeordnete Rad (2, 3) ausübt, um die Winkelgeschwindigkeit (v2, v3) des zugeordneten Rades (2, 3) zu verringern;
**dadurch gekennzeichnet, dass** es Folgendes umfasst:

   - Berechnungsmittel (12), die dazu in der Lage sind, einen für die Differenz zwischen den Winkelbeschleunigungen (a2, a3) des linken Rades (2) und des rechten Rades (3) des Radsatzes (4) repräsentativen Wert zu berechnen; wobei die Berechnungsmittel (12) außerdem dazu in der Lage sind, einen Korrekturwert (y) in Abhängigkeit zumindest von dem für die Differenz zwischen den Winkelbeschleunigungen (a2, a3) des linken Rads (2) und des rechten Rads (3) des Radsatzes (4) repräsentativen Wert zu berechnen;
   - Steuermittel (14) um für jedes Rad (2, 3) des Radsatzes (4) das zugeordnete Bremsmittel (6) zu steuern, um die durch das zugeordnete Bremsmittel (6) ausgeübte Schleppkraft in Abhängigkeit von dem durch die Berechnungsmittel (12) berechneten Korrekturwert (y) zu ändern, sodass die auf ein erstes Rad (2, 3), das zwischen dem linken Rad (2) und dem rechten Rad (3) des Radsatzes (4) ausgewählt ist, ausgeübte Schleppkraft erhöht wird und die auf ein zweites Rad (2, 3), das sich vom ersten Rad (2, 3) unterscheidet, ausgeübte Schleppkraft verringert wird, um den für die Differenz zwischen den Winkelbeschleunigungen (a2, a3) des linken Rades (2) und des rechten Rades (3) des Radsatzes (4) repräsentativen Wert zu reduzieren;

wobei der Korrekturwert (y) proportional (G) zu dem für die Differenz zwischen den Winkelbeschleunigungen (a2, a3) des linken Rades (2) und des rechten Rades (3) des Radsatzes (4) repräsentativen Wert ist.

7. Kraftfahrzeug (1), umfassend eine Steuerungsvorrichtung (8) nach Anspruch 6.

## Claims

1. Method for controlling lateral pulling of a moving motor vehicle (1) during braking of said motor vehicle (1),
   said motor vehicle (1) comprising at least one wheelset (4); said wheelset (4) comprising a left wheel (2) and a right wheel (3); each wheel (2, 3) of said wheelset (4) defining an angular speed (v2, v3) and an angular acceleration (a2, a3);
   each wheel (2, 3) of said wheelset (4) cooperating with a braking means (6) such that said braking means (6) applies a drag force to the associated wheel (2, 3) so as to reduce the angular speed (v2, v3) of said associated wheel (2, 3);
   comprising the following steps:

   a) calculating a value representative of the difference between the angular accelerations of the left (2) and right (3) wheels of the wheelset (4);
   b) calculating a correction value (y) as a function of at least said value representative of the difference between the angular accelerations (a2, a3) of the left (2) and right (3) wheels of the wheelset (4);
   c) for each wheel (2, 3) of the wheelset (4), controlling the associated braking means (6) so as to modify the drag force applied by the associated braking means (6) as a function of the correction value (y) calculated in step b), such that the drag force applied to a first wheel (2, 3) selected from the left wheel (2) and right wheel (3) of the wheelset (4) is increased, and the drag force applied to a second wheel (2, 3) different from the first wheel (2, 3) is reduced, in order to reduce said value representative of the difference between the angular accelerations (a2, a3) of the left (2) and right (3) wheels of said wheelset (4);

   the correction value (y) being proportional (G) to the value representative of the difference between the angular accelerations (a2, a3) of the left (2) and right (3) wheels of the wheelset (4).

2. Control method according to Claim 1, **characterized in that** steps a) to c) are repeated until the value representative of the difference between the angular accelerations (a2, a3) of the left (2) and right (3) wheels of the wheelset (4), calculated during step a), is zero.

3. Control method according to either one of Claims 1 and 2, **characterized in that** during step a):

   - for each left (2) and right (3) wheel of the wheelset (4), an angular acceleration value (a2, a3) of said wheel (2, 3) is received;
   - the difference between the angular acceleration values (a2, a3) calculated for the left wheel (2) and right wheel (3) is calculated.

4. Control method according to either one of Claims 1 and 2, **characterized in that** during step a):

   - for each left (2) and right (3) wheel of the wheelset (4), an angular speed value (v2, v3) of said wheel (2, 3) is received;
   - a value for the difference ($\varepsilon$) between the received angular speed values (v2, v3) is calculated;
   - a derivative value for the difference between the angular speed values (v2, v3) is estimated, said derivative value corresponding to the value representative of the difference between the angular accelerations (a2, a3) of the left (2) and right (3) wheels of the wheelset (4).

5. Control method according to any one of Claims 1 to 4, **characterized in that** it is applied to a front wheelset (4) of a motor vehicle (1).

6. Device (8) for controlling the lateral pulling of a moving motor vehicle (1) during braking of said motor vehicle (1),
   said motor vehicle (1) comprising at least one wheelset (4); said wheelset (4) comprising a left wheel (2) and a right wheel (3); each wheel (2, 3) of said wheelset (4) defining an angular speed (v2, v3) and an angular acceleration (a2, a3);
   each wheel (2, 3) of said wheelset (4) cooperating with a braking means (6) such that said braking means (6) applies a drag force to the associated wheel (2, 3) so as to reduce the angular speed (v2, v3) of said associated wheel (2, 3);
   **characterized in that** it comprises:

   - calculating means (12) able to calculate a value representative of the difference between the angular accelerations (a2, a3) of the left (2) and right (3) wheels of the wheelset (4); the calculating means (12) also being able to calculate a correction value (y) as a function of at least said value representative of the difference between the angular accelerations (a2, a3) of the left (2) and right (3) wheels of the wheelset (4);
   - control means (14) to control, for each wheel (2, 3) of the wheelset (4), the associated braking means (6) so as to modify the drag force applied by said associated braking means (6) as a function of the correction value (y) calculated by the calculating means (12), such that the drag force applied to a first wheel (2, 3) selected from the left wheel (2) and right wheel (3) of the wheelset (4) is increased, and the drag force applied to a second wheel (2, 3) different from the first wheel (2, 3) is reduced, in order to reduce said value representative of the difference between the angular accelerations (a2, a3) of the left (2) and right (3) wheels of said wheelset (4);

the correction value (y) being proportional (G) to the value representative of the difference between the angular accelerations (a2, a3) of the left (2) and right (3) wheels of the wheelset (4).

7. Motor vehicle (1) comprising a control device (8) according to Claim 6.

**Fig.1**

**Fig.2**

**Fig.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 5407259 A